# EUROPEAN PATENT APPLICATION

(11) **EP 3 336 921 A1**
(43) Date of publication of application: **20.06.2018**
(21) Application number: 16203938.2
(22) Date of filing: 14.12.2016
(51) Int. Cl.: H01M 2/02, H01M 2/34

(54) **BATTERY**

(71) Applicant: Lithium Energy and Power GmbH & Co. KG, 70469 Stuttgart (DE)
(72) Inventor: Deromelaere, Gaetan, 70806 Kornwestheim (DE); Liebenow, Cornelius, 70372 Stuttgart (DE)
(74) Representative: Bee, Joachim

(57) **Abstract**

The invention regards a battery (1) comprising at least one battery cell (2), at least one discharging device (3) for discharging the battery cell (2), and a pouch (4) containing the battery cell (2) and the discharging device (3), wherein the pouch (4) comprises a first compartment (5) and a second compartment (6), and wherein the battery cell (2) is provided in the first compartment (5) and the discharging device (3) is provided in the second compartment (6).

## Description

### Prior art

The invention regards a battery. Particularly, the invention regards a pouch battery. The pouch battery comprises a discharging device in order to perform fast discharging in case of damage.

From the prior art, pouch batteries are known. Such batteries comprise a flexible pouch which covers the battery cells. Pouch batteries might comprise a flat shape or might be rolled into jelly roll. In any case, the pouch encapsulates the components in a fluid tight manner.

In order to supply power, the battery comprises two conducting elements which are guided through the pouch. Any discharging device will have to be connected to said conducting elements. However, providing the discharging device outside the pouch increases the resistance of the current path the discharging device establishes due to the increased distance to the battery cells inside the pouch. Providing the discharging device inside the pouch on the other side leads to increased corrosion due to the electrolyte inside the pouch.

### Disclosure of the invention

The inventive battery allows providing discharging devices which establishes low resistance current paths while at the same time being protected from corrosive fluids as the electrolyte of the battery.

The battery according to the invention comprising at least one battery cell and at least one discharging device for discharging the battery cell. Further, the battery comprises a pouch containing the battery cell and the discharging device. The pouch includes a first compartment and a second compartment, which preferably are fully separated from each other. The battery cell is provided in the first compartment. Therefore, the battery cell is a pouch type cell. Particularly, each battery cell is provided inside a single first compartment of a pouch. The discharging device is provided in the second compartment. Therefore, the discharging device is encapsulated and protected from external influences. Further, the discharging device is protected from the electrolyte of the battery. Particularly, only the discharging device is provided inside the second compartment. The first compartment and the second compartment preferably are arranged adjacent to each other. Therefore, the path the current has to flow during the discharging device shortcutting the battery cell, is reduced. Therefore, the current path established via the discharging device has a low electrical resistance.

The dependent claims contain advantageous embodiments of the present invention.

In a preferred embodiment, the pouch comprises at least one outer seam for sealing the pouch and at least one inner seam for separating the first compartment from the second compartment. Therefore, the first compartment and the second compartment can simply be manufactured.

Particularly, the pouch comprises a first part and a second part. The first part and the second part particularly touch each other and cover the battery cell and the discharging device. This means, that the first part and the second part preferably are single layers, which are connected via the above described seams. The first part and the second part therefore are connected via said seams in order to form the pouch.

Preferably, the first part and the second part each are separate foils. These two foils are particularly connected via seams in order to form the pouch for housing the battery cell. In an alternative embodiment, the first part and the second part are two parts of a single foil defined by folding the single foil at a folding section. Due to the folding an additional seams, again a pouch is formed for housing the battery cell.

A pair of conducting elements preferably proceeds from the battery cell through the pouch to supply electrical power from the battery cell to the outside of the pouch. Particularly, the conducting elements proceed through the first seam. The conducting elements further proceed through the second compartment, wherein the discharging device is electrically coupled to the conducting elements. The path a current has to flow in case of a shortcut generated via the discharging device therefore is reduced. This leads to a low electrical resistance such that a high current flows in case of said shortcut. This leads to a fast discharge of the battery cell.

The conducting elements preferably are made of nickel and/or aluminum and/or copper. Those materials allow both, heat and current conduction such that heat generated due to the shortcut established by the discharging device can be dissipated. Therefore, overheating of the discharging device and therefore of the respective battery cell is avoided.

In a further preferred embodiment, two pairs of conducting elements independently proceed from the battery cell through the pouch. Particularly, said two pairs of conducting elements proceed from the pouch on different sides of the battery cell. Therefore, the pouch comprises two different areas in which the conducting elements proceed through the pouch. Further preferred, the pouch comprises one first compartment and two second compartments, wherein one pair of conducting elements proceeds through one of the second compartments which the other pair of conducting elements proceeds through the other one of the second compartments. Each of the two second compartments houses one discharging device such that in this embodiment two discharging devices are provided for any one battery cell. Each discharging device is coupled to the respective pair of conducting elements such that one discharging device is electrically coupled to each pair of conducting elements. Due to the increased number of discharging devices, the time for discharging the battery cell is reduced.

At least one control wire preferably proceeds from the discharging device through the pouch. Particularly, one control wire for each discharging device is provided. The control wire is directly coupled to the respective discharging device. Further, the control wire allows activating or deactivating the discharging device from outside the pouch. Particularly, the control wire has to be exposed to a predefined voltage in order to start an exothermic reaction inside the discharging device, the exothermic reaction destroying an isolating element that prevents the above described shortcut. Destroying the isolating elements therefore establishes the above described current path. In an alternative mechanism the exothermic reaction establishes the described current path by melting an amount of solder, which flows through gaps in the isolating elements to connect the conducting elements to provide said shortcut.

The pouch particularly is made from a non-conductive material, particularly from a non-conductive plastic. Therefore, no shortcut can be established via the pouch. The pouch rather is an isolating element for electrically isolating the discharging device and the battery cell.

In a preferred embodiment, the pouch encapsulates the battery cell and the discharging device in a gastight manner. Therefore, it is not possible for fluids to leave the pouch.

### Description of the drawings

In the following, preferred embodiments will be described together with the attached drawings. In the drawings:
- Figure 1: is a schematic view of a battery according to a first embodiment of the invention,
- Figure 2: is a schematic cut view of the battery according to the first embodiment of the invention,
- Figure 3: is a schematic detail view of the battery according to the first embodiment of the invention,
- Figure 4: is a schematic view of a battery according to a second embodiment of the invention, and
- Figure 5: is a schematic view of a battery according to a third embodiment of the invention,

### Embodiments of the invention

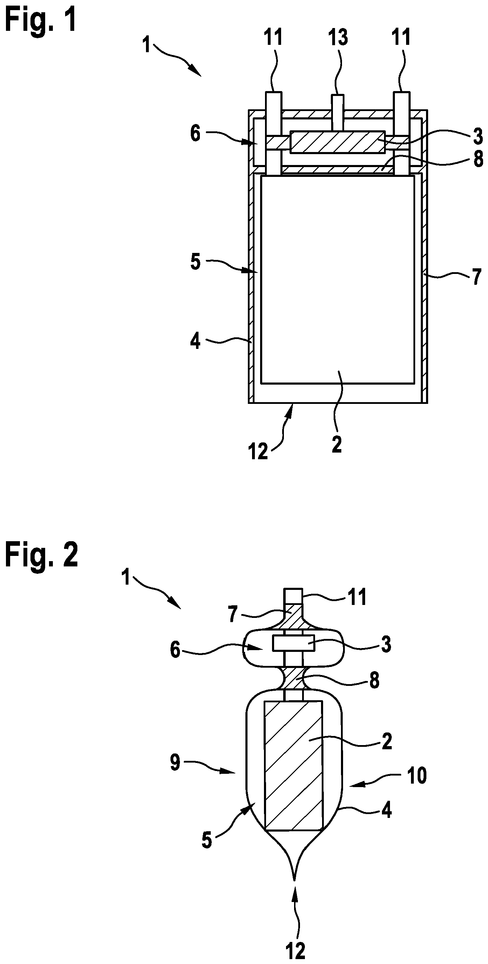

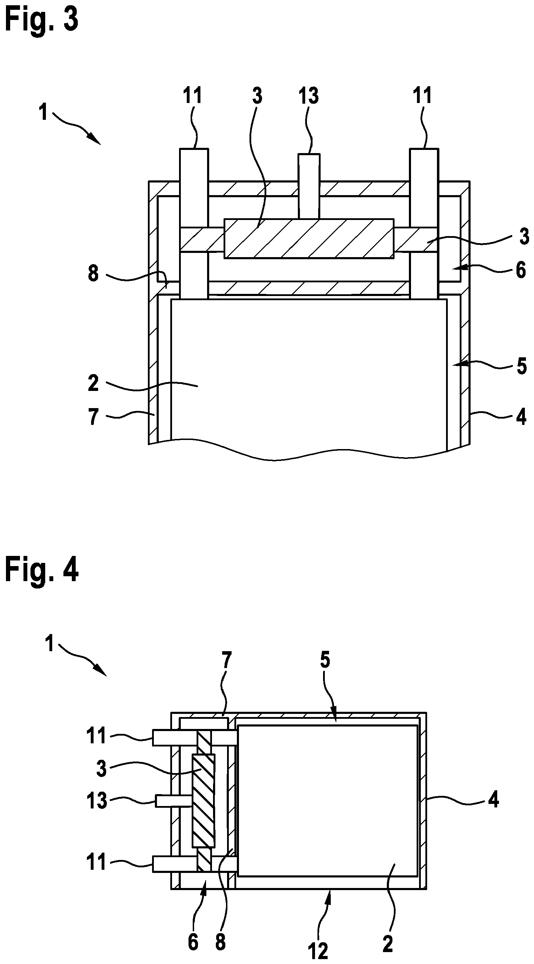

Figure 1 is a schematic view of a battery 1 according to first embodiment of the invention. Figure 2 is a schematic cut view of the battery 1. Figure 3 finally is a schematic detail view of the battery 1.

The battery 1 comprises at least one battery cell 2. The battery cell 2 is connected with conductive elements 11 which allow providing electrical power to further devices. The conductive elements 11 preferably are made of nickel and/or aluminum and/or copper Additionally, the battery 1 comprises a discharging device 3 for discharging the battery cell 2 in case of internal shortcuts. The discharging device 3 establishes an external shortcut which preferably has a low electrical resistance. Therefore, the battery cell 2 is discharged via the discharging device 3 such that overheating of the battery cell 2 is prevented. The discharging device 3 is connected to the conductive elements 11 preferably close to the battery cell 2 in order to reduce the current path in case of an external shortcut. This further reduces the electrical resistance of the current path.

The battery also comprises a pouch 4. The pouch 4 is made from plastic foil and seals the battery cell 2 and the discharging device 3. In order to also seal the discharging device 3 from the battery cell 2, the pouch 4 comprises a first compartment 5 and a second compartment 6. The first compartment 5 and the second compartment 6 preferably are fully isolated from each other. The first compartment 5 houses the battery cell 2 and the second compartment houses the discharging device 3. This particularly allows isolating the discharging device 3 from corrosive electrolytes of the battery cell 2 thereby increasing the lifetime of the discharging device 3. Particularly, the pouch 4 encapsulates the battery cell 2 and/or the discharging device 3 in a gastight manner.

As can particularly be seen from figure 2, the pouch 4 comprises a first part 9 and a second part 10. The first part 9 and the second part 10 preferably are single layers of foil or are connected via a folding section 12 as shown in figure 2. This means that a single layer of foil is fold along the folding section 12 such that the first part 9 and the second part 10 are generated.

The first part 9 and the second part 10 are - apart from the folding section 12 - only connected via outer seams 7 and inner seam 8. The outer seams 7 run along an outer periphery of the first part 9 and the second part 10 in order to generate the pouch shape. The inner seam 8 divides the pouch 4 into the first compartment 5 and the second compartment 6. In this way, the pouch 4 having a first compartment 5 and a second compartment 6 is manufactured in a cost efficient and time efficient manner.

The conductive elements 11 proceed through the second compartment 6. Therefore, the conductive elements 11 are the only element proceeding through the inner seam 8. Further, the conductive elements 11 proceed through the outer seam 8. Additionally, an activating element 13 also proceeds through one of the outer seems 8. The activating element 13 is connected to the discharging device 3 and allows activating of the discharging device 3. After activating the discharging device 3, the discharging device establishes the external shortcut to discharge the battery cell 2.

Figure 4 is a schematic view of a battery 1 according to a second embodiment of the invention. The only difference between the first embodiment and the second embodiment is the side of the battery 1, on which the folding section 12 is placed. In the second embodiment, the folding section 12 is placed such that it also runs along the second compartment 6 in addition to the first compartment 5. Therefore, the second compartment 6 is not fully encapsulated by outer seams 7 and the inner seam 8 but is also encapsulated by the folding section 12. In other respects, the second embodiment corresponds to the first embodiment.

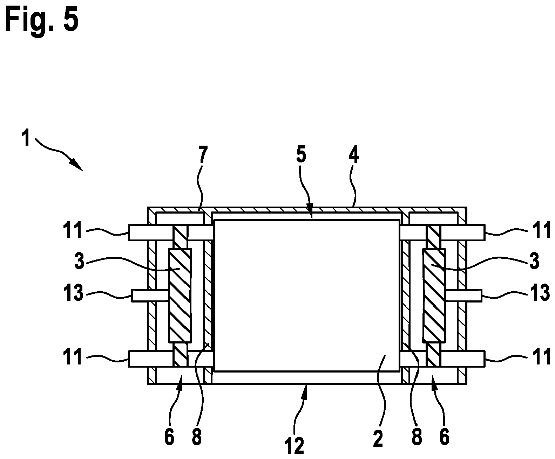

Figure 5 is a schematic view of a battery 1 according to a third embodiment of the invention. The second embodiment corresponds to the second embodiment, wherein an additional second compartment 6 is provided. Therefore, the first compartment 5 is framed by two second compartments 6. In each second compartment 6, a discharging device 3 is provided.

Further, two pairs of conductive elements 11 are provided, wherein each pair of conductive element 11 proceeds to one of the second compartments 6. The discharging device 3 provided in the respective second compartment 6 is connected to the respective pair of conductive elements 11. Therefore, the battery cell 2 can be discharged via both discharging devices 3. In other respects, the third embodiment corresponds to the second embodiment.

## Claims

1. Battery (1) comprising
• at least one battery cell (2),
• at least one discharging device (3) for discharging the battery cell (2), and
• a pouch (4) containing the battery cell (2) and the discharging device (3),
• wherein the pouch (4) comprises a first compartment (5) and a second compartment (6), and
• wherein the battery cell (2) is provided in the first compartment (5) and the discharging device (3) is provided in the second compartment (6).

2. Battery (1) according to claim 1, **characterized in that** the pouch (4) comprises at least one outer seam (7) for sealing the pouch (4) and at least one inner seam (8) for separating the first compartment (5) from the second compartment (6).

3. Battery (1) according to any of the previous claims, **characterized in that** the pouch (4) comprises a first part (9) and a second part (10), wherein the first part (9) and the second part (10) touch each other and cover the battery cell (2) and the discharging device (3).

4. Battery (1) according to claim 3, **characterized in that** the first part (9) and the second part (10) each are separate foils or are two parts of a single foil defined by folding the single foil at a folding section (12).

5. Battery (1) according to any of the previous claims, **characterized by** a pair of conducting elements (11) proceeding from the battery cell (2) through the pouch (4) to supply electrical power from the battery cell (2) to the outside of the pouch (4), wherein the discharging device (3) is electrically coupled to the conducting elements (11).

6. Battery (1) according to claim 5, **characterized in that** the conducting elements (11) are made of nickel and/or aluminum and/or copper.

7. Battery (1) according to claim 5 or 6, **characterized in that** two pairs of conducting elements (11) independently proceed from the battery cell (2) through the pouch (4), particularly on different sides of the battery cell (2), wherein one discharging device (3) is electrically coupled to each pair of conducting elements (11).

8. Battery (1) according to any of the previous claims, **characterized in that** at least one control wire (13) proceeds from the discharging device (3) through the pouch (4) to allow activating or deactivating the discharging device (3) from outside the pouch (4).

9. Battery (1) according to any of the previous claims, **characterized in that** the pouch (4) is made from a non-conductive material, particularly from a non-conductive plastic.

10. Battery (1) according to any of the previous claims, **characterized in that** the pouch (4) encapsulates the battery cell (2) and the discharging device (3) in a gastight manner.
